# EUROPÄISCHE PATENTSCHRIFT

(11) **EP 2 772 747 B1**
(45) Veröffentlichungstag und Bekanntmachung des Hinweises auf die Patenterteilung: **29.12.2021**
(21) Anmeldenummer: 14157500.1
(22) Anmeldetag: 03.03.2014
(51) Int. Cl.: G01N 15/06, B01D 46/00, B01D 46/10, G01N 15/00

(54) **FILTEREINHEIT MIT EINEM PARTIKELSAMMELFILTER**
FILTER UNIT WITH A PARTICLE COLLECTING FILTER
FILTRE DOTÉ D'UN FILTRE À PARTICULES

(30) Priorität: 01.03.2013 DE 102013203496; 01.07.2013 DE 102013212804
(43) Veröffentlichungstag der Anmeldung: 03.09.2014
(73) Patentinhaber: Comde-Derende GmbH, 14532 Stahnsdorf (DE)
(72) Erfinder: DERENDA, Norbert, 12207 Berlin (DE); BEY, Carsten, 14478 Potsdam (DE); WEIDAUER, Derk, 14532 Kleinmachnow (DE); RUHLE, Bastian, DE 10179 Berlin (DE)
(74) Vertreter: Maikowski & Ninnemann Patentanwälte Partnerschaft mbB

(56) Entgegenhaltungen:
- EP-A1- 1 985 351
- CN-A- 101 278 432
- DE-A1- 10 000 435
- DE-U1- 8 101 135
- DE-U1- 8 806 081
- FR-A1- 2 617 734
- US-A1- 2004 065 622
- None

## Beschreibung

Die Erfindung betrifft eine Filtereinheit nach dem Oberbegriff des Anspruches 1.

Eine solche Filtereinheit ist aus der DE 81 01 135 U1 bekannt und weist einen flächigen, regelmäßig kreisscheibenförmigen Partikelsammelfilter auf. Die Filtereinheit ist von Luft durchströmbar, um an dem Partikelsammelfilter in der Luft enthaltene Partikel, insbesondere Staub Partikelsammelfilter zu sammeln. Dabei ist der Partikelsammelfilter an dem vorzugsweise aus einem für Luft durchlässigen Filtermaterial hergestellt, so dass Luft durch den Partikelsammelfilter geführt werden kann.

Eine Filtereinheit weist hierbei üblicherweise wenigstens das Folgende auf:
- eine mehrteilige Gehäusebaugruppe für den Partikelsammelfilter, mit zwei miteinander verbundenen Gehäuseteilen, üblicherweise einem Deckelteil und einem Unterteil
- einen Filtereinsatz, der in der Gehäusebaugruppe aufgenommen ist und der ein Trägerbauteil aufweist, an dem der Partikelsammelfilter gehalten ist, und
- ein Stützsieb zur Abstützung des Partikelsammelfilters innerhalb der Gehäusebaugruppe, das an einem Gehäuseteil angeordnet ist, um eine Verformung des beladenen, d.h. mit gesammelten bzw. zurückgehaltenen Partikeln beschwerten, Partikelsammelfilters zu verhindern.

Die Filtereinheit ist dabei regelmäßig als Modul oder Kassette zum Einsetzen in eine Filtervorrichtung ausgeführt und kann in der Umweltmesstechnik etwa zur Bestimmung der PM₁₀ und PM_{2.5} Massenkonzentration oder in Emissionsmessungen, für die Luft aus Abgasleitungen durch den Partikelsammelfilter geführt wird, dienen. Partikel werden auf dem Partikelsammelfilter zurückgehalten (Bestaubung), so dass deren Masse durch Wiegung des Filters bestimmt werden kann.

Gemäß dem Stand der Technik werden Partikelsammelfilter zur Bestaubung beispielsweise in normgerechte Kassetten (z. B. CFR (Code of Federal Regulations) §1065.170; US-amerikanische Regulierungsvorschriften für die Partikelsammlung und insbesondere den Aufbau der hierbei zu verwendenden Filter) eingesetzt. Ein kreisscheibenförmiger Partikelsammelfilter liegt hier in einem Ring, an dem er manuell gehandhabt werden kann. Der Partikelsammelfilter wird dabei von einem feinen metallischen Stützsieb unterstützt, so dass er bei der Bestaubung dem entstehenden Staudruck standhält, ohne sich zu verformen. Ein Deckelteil drückt den Rand des Partikelsammelfilters auf den Rand des Stützsiebes, wodurch der Partikelsammelfilter in seiner Position gehalten wird. Durch den Andruck des Partikelsammelfilters auf den Rand des Stützsiebes wird weiterhin das Ansaugen von Fremdluft von der Seite vermeiden.

Bei Verwendung von üblichen Kassetten entsprechend dem Stand der Technik ist es erforderlich, dass ein Partikelsammelfilter nach Abheben des Deckelteils mithilfe einer geeigneten Pinzette von dem Stützsieb gehoben und zum Zwecke der Klimatisierung in andere Aufnahmen gelegt wird. Bei der nachfolgenden Wiegung wird der Partikelsammelfilter wiederum mithilfe einer Pinzette gehandhabt und auf die Waage gelegt.

Die Nachteile im Zusammenhang mit der Handhabung gemäß dem Stand der Technik sind unter anderem:
a. Der Partikelsammelfilter wird ein- oder mehrmals mit einer Pinzette gegriffen. Dadurch kann es zur Ablösung einzelner Fasern kommen, die das Wägeergebnis beeinträchtigt.
b. Die sichere Identifizierung des Partikelsammelfilters erfordert, ihn zu markieren. Alternativ können nicht markierte Filterscheiben nur in einem potenziell fehlerträchtigen Prozess anhand ihrer wechselnden Lagerbehälter oder Ablageorte verfolgt werden.
c. Das Entnehmen des Partikelsammelfilters aus der Kassette bzw. der Gehäusebaugruppe ist aufgrund der Handhabung mit Pinzetten ein schwer automatisierbarer Prozessschritt.

In der Umweltmesstechnik können aus täglichen Routinemessungen an etlichen Standorten einer Region in einer Zentrale pro Woche hunderte Partikelsammelfilter anfallen, die genau und fehlerfrei gewogen werden müssen. Hier lohnt der Einsatz von automatischen Systemen, mithilfe derer diese Prozesse im vorgeschriebenen Zeitablauf präzise und verwechslungsfrei ausgeführt werden. Dies ist aber bei den bisher bekannten Filtereinheiten allenfalls bedingt möglich.

Der vorliegenden Erfindung liegt damit die Aufgabe zugrunde, eine eingangs genannte Filtereinheit weiter zu verbessern und deren Handhabung insbesondere bei automatisierten Prozessen zu erleichtern.

Diese Aufgabe wird mit der Filtereinheit des Anspruchs 1 gelöst.

Gemäß der vorliegenden Erfindung ist eine Filtereinheit vorgesehen, die mit einem flächig ausgebildeten Partikelsammelfilter zur Bestimmung von Massenkonzentrationen in der Luft oder zur Emissionsmessungen an einer in einer Abgasleitung geführten Luft ausgebildet ist und vorzugsweise aus einem für Luft durchlässigen Filtermaterial hergestellt ist. Neben einer mehrteiligen, ein Modulgehäuse bildenden Gehäusebaugruppe für den Partikelsammelfilter und einem Filtereinsatz mit einem Trägerbauteil, an dem der Partikelsammelfilter gehalten ist, weist eine solche Filtereinheit ein Stützsieb zur Abstützung des Partikelsammelfilters innerhalb der Gehäusebaugruppe auf, wobei dieses Stützsieb eine Verformung des beladenen, d. h. mit gesammeltem bzw. zurückgehaltenen Partikeln beschwerten Partikelsammelfilter verhindert und an einem der Gehäuseteile (fest) angeordnet ist.

Erfindungsgemäß weist das Trägerbauteil des Filtereinsatzes zwei unterschiedliche Kraftschlussbereiche auf, die jeweils im Wesentlichen senkrecht von einer durch den flächigen Partikelsammelfilter aufgespannten Filterebene vorstehen. Über einen dieser Kraftschlussbereiche ist der Filtereinsatz an einem der Gehäuseteile (Unterteil) und über den anderen Kraftschlussbereich an dem anderen Gehäuseteil (Deckelteil) kraftschlüssig befestigt, und zwar derart, dass bei einem Trennen der beiden Gehäuseteile voneinander der Filtereinsatz mit dem Partikelsammelfilter weiterhin an einem der Gehäuseteile gehalten ist.

Hierdurch verbleibt der Filtereinsatz mit dem Partikelsammelfilter an einem der Gehäuseteile und bleibt an diesem kraftschlüssig und vorzugsweise zusätzlich formschlüssig fixiert, wenn das andere Gehäuseteil entfernt wird. Dies erleichtert das Herausnehmen des Filtereinsatzes, da ein Gehäuseteil entfernt werden kann, ohne dass der Filtereinsatz dann lose vorliegt und beispielsweise aus dem anderen Gehäuseteil herausfallen kann.

Weiterhin ist bei einer erfindungsgemäßen Filtereinheit vorgesehen, dass das Stützsieb gegen die Unterseite des Partikelsammelfilters gedrückt wird, wenn die zwei Gehäuseteile und der Filtereinsatz miteinander verbunden werden, und dass der lose in das Trägerbauteil eingelegte Partikelsammelfilter erst bei bestimmungsgemäßer Verbindung der beiden Gehäuseteile miteinander an dem Filtereinsatz und innerhalb der durch die zwei Gehäuseteile definierten Gehäusebaugruppe fixiert wird. Derart kann der Partikelsammelfilter leicht von dem Filtereinsatz abgehoben werden, wenn die beiden Gehäusebauteile voneinander getrennt wurden und damit die Fixierung aufgehoben ist.

Bevorzugt wird über den Kraftschlussbereich eine Steckverbindung bereitgestellt, über die der Filtereinsatz an dem einen Gehäuseteil befestigt ist. So kann der Filtereinsatz beim Zusammenbau der Filtereinheit leicht werkzeuglos, d. h. insbesondere ohne zusätzliche Befestigungselemente wie Schrauben, Bolzen oder Niete, an wenigstens eines der Gehäuseteile gesteckt werden.

Beispielsweise kann der Kraftschlussbereich dazu dienen, den Filtereinsatz an dem Gehäuseteil zu befestigen, das das Stützsieb aufweist. Das andere Gehäuseteil, üblicherweise ein Deckelteil, kann somit von dem anderen, das Stützsieb aufweisenden Gehäuseteil - dem Unterteil - entfernt werden und anschließend der noch an dem Gehäuseteil mit dem Stützsieb befestigte Filtereinsatz oder auch nur der hieran angeordnete Partikelsammelfilter entnommen werden.

Ein Kraftschlussbereich kann aber auch alternativ oder ergänzend dazu dienen, den Filtereinsatz gerade an dem Gehäuseteil zu befestigen, das nicht das Stützsieb aufweist. So kann beispielsweise der Filtereinsatz über einen (zusätzlichen) Kraftschlussbereich (auch) an ein Deckelteil gesteckt sein. Derart kann der Filtereinsatz in einfacher Weise von dem Deckelteil gelöst werden, der Filtereinsatz bleibt aber gleichzeitig an dem Deckelteil weiterhin über den Kraftschlussbereich befestigt, wenn das andere Gehäuseteil mit dem Stützsieb entfernt wird.

In einer Ausführungsvariante stellt ein Kraftschlussbereich zusätzlich eine seitliche bzw. randseitige Abstützung für den Partikelsammelfilter bereit. So kann über den Kraftschlussbereich eine Berandung einer Stützfläche des Trägerbauteils gebildet sein, auf der der Partikelsammelfilter aufliegt. Vorzugsweise bildet das Trägerbauteil des Filtereinsatzes an einer (Ober-)Seite eine wannenartige, schalenartige oder pfannenartige Aussparung aus, in die der Partikelsammelfilter eingelegt ist und deren Rand einen oder mehrere Kraftschlussbereiche ausbildet. Eine solche Aussparung weist vorzugsweise eine (großflächige) zentrale Durchgangsöffnung auf, durch die Luft an einem für Luft durchlässigen Partikelsammelfilter vorbeigeführt werden kann.

Insbesondere ein Kraftschlussbereich, der seitlich an den Partikelsammelfilter angrenzt, wenn der Partikelsammelfilter bestimmungsgemäß positioniert ist, ist vorzugsweise konisch ausgebildet, so dass er eine schräg verlaufende Seitenfläche aufweist, durch die der Partikelsammelfilter an dem Trägerbauteil zentriert wird, wenn der Partikelsammelfilter an diesem angeordnet wird.

Zur weiteren Erleichterung der Handhabung, insbesondere zur automatisierten Entnahme des Filtereinsatzes und dessen Transport ist in bevorzugten Ausführungsvarianten vorgesehen, dass der Kraftschlussbereich einen Griffabschnitt definiert. Über einen solchen Griffabschnitt ist ein Kraftangriff möglich ist, um den Filtereinsatz mit dem Partikelsammelfilter von dem Gehäuseteil zu trennen, an dem der Filtereinsatz nach dem Trennen der beiden Gehäuseteile voneinander gehalten ist, und/oder um den Filtereinsatz - insbesondere nach der Trennung von beiden Gehäuseteilen - zu transportieren. So kann insbesondere über einen senkrecht zur Filterebene vorstehenden Kraftschlussbereich des Filtereinsatzes bzw. seines Trägerbauteils das formschlüssige Ergreifen des Filtereinsatzes über einen Roboterarm erheblich erleichtert werden. Auch hierfür wird es bevorzugt, dass der Kraftschlussbereich im Querschnitt konisch ausgebildet ist.

Hier kann der Filtereinsatz beispielsweise über einen ringförmig an einer Oberseite des Trägerbauteils vorstehenden Kraftschlussbereich mit einem Deckelteil verbunden und in dieses eingesteckt sein. Über einen ebenfalls vorzugsweise ringförmig an der gegenüberliegenden Unterseite vorstehenden Kraftschlussbereich des Trägerbauteils ist der Filtereinsatz an ein Unterteil gesteckt, an dem das Stützsieb angeordnet ist. Durch die beiderseitigen Steckverbindungen können sowohl das Deckelteil als auch das Unterteil mit dem Stützsieb verbunden und in einfacher Weise wieder von dem Filtereinsatz entfernt. Ebenso können die beiden Gehäuseteile leicht über den Filtereinsatz miteinander verbunden und wieder voneinander getrennt werden, wobei hier wahlweise - je nach Kraftangriff und je nachdem, welche Teile der Filtereinheit fest gehalten werden oder fixiert sind - entweder das Deckelteil von dem Unterteil und dem Filtereinsatz oder das Unterteil mit dem Stützsieb von dem Deckelteil und dem Filtereinsatz getrennt werden kann.

Die Filtereinheit bildet mit der Gehäusebaugruppe und dem darin aufgenommenen Filtereinsatz bevorzugt ein vormontierbares Modul, insbesondere eine sogenannte Kassette zum Einsetzen in eine Filtervorrichtung für die Bestimmung bestimmter Massenkonzentrationen in der Luft oder für Emissionsmessungen an einer in einer Abgasleitung geführten Luft.

Üblicherweise wird durch Wiegung eines scheibenförmigen Partikelsammelfilters vor und nach einer Bestaubung die Masse der gesammelten Partikel bestimmt (gravimetrische Staubbestimmung). Dabei setzt eine korrekte Wiegung einen kontrollierten Feuchtegehalt des Partikelsammelfilters - hier in Form einer Filterscheibe - und des Staubes voraus, wofür der Partikelsammelfilter vor und nach der Bestaubung zuerst über viele Stunden klimatisiert und dann gewogen werden muss. Die Wiegung erfolgt hierbei mit einer Auflösung von 1 µg, teilweise sogar 0,1 µg. Gerade bei derartigen Wiegeprozessen ist die erfindungsgemäße Lösung besonders vorteilhaft, da hierdurch eine Automatisierung erheblich vereinfacht werden kann.

In einer Ausführungsvariante kann der Filtereinsatz mit einem elektronischen Schaltkreis versehen sein, der dazu ausgebildet und vorgesehen ist,
- eine elektronisch auslesbare Kennung des Filtereinsatzes bereitzustellen und/oder
- elektronisch auslesbare Daten bereitzustellen, die während eines Gebrauchs der Filtereinheit erzeugt wurden.

Bei den bisher üblichen Filtereinheiten und Partikelsammelfiltern wird allenfalls eine äußerlich sichtbare Kennzeichnung vorgenommen, die dann häufig manuell erfasst werden muss, wenn der Partikelsammelfilter weiterverarbeitet, insbesondere gewogen wird. Über die Verwendung eines elektronischen Schaltkreises, der das elektronische Auslesen einer Kennung ermöglicht und hierfür beispielsweise einen RFID-Chip (RFID="radio-frequency identification", sinngemäß "Identifizierung mittels elektromagnetischer Wellen") aufweist, kann der Filtereinsatz und damit sein Partikelsammelfilter deutlich effizienter elektronisch identifiziert werden.

In einem solchen elektronischen Schaltkreis können des Weiteren Daten während eines Gebrauchs der Filtereinheit und damit des Sammelns von Partikeln an dem Partikelsammelfilter bereitgestellt werden, die sich beispielsweise auf die Messung selbst beziehen. So können hier Prozessdaten gespeichert werden, die die Dauer und/oder den Ort einer Messung, insbesondere eine Bestäubungszeit und einen Messort betreffen. Es wird daher bevorzugt, wenn der elektronische Schaltkreis einen elektronischen Datenspeicher enthält, um die auslesbaren Daten bereitzustellen.

Bevorzugt ist die Aussparung an dem Trägerbauteil schalen- oder wannenartig ausgebildet. Die Aussparung kann zudem eine bevorzugt zentrale bzw. mittige Öffnung aufweisen, durch die Luft bis an den Partikelsammelfilter oder durch diesen hindurch strömen kann.

Vorzugsweise ist eine Filtereinheit so aufgebaut, dass sie - insbesondere hinsichtlich ihrer Abmessungen - geltende Normen erfüllt, insbesondere die Norm gemäß CFR §1065.170. Obwohl eine erfindungsgemäße Filtereinheit somit geltende Normen erfüllt, kann sie die erfindungsgemäßen Merkmale aufweisen.

Vorteilhafte Ausgestaltungsvarianten sind auch durch die Unteransprüche gegeben.

Weitere Vorteile und Merkmale der vorliegenden Erfindung werden bei der nachfolgenden Beschreibung eines Ausführungsbeispiels anhand der Figuren deutlich werden.

Es zeigen:
- Fig. 1: eine Schnittansicht einer Ausführungsform einer erfindungsgemäßen Filtereinheit mit einem Filtereinsatz, der zwei unterschiedliche Kraftschlussbereiche aufweist, über die der Filtereinsatz durch Steckverbindungen sowohl mit einem Deckelteil als auch mit einem Unterteil verbunden ist;
- Fig. 2 - 4: Einzelansichten des Deckelteils, des Filtereinsatzes und des Unterteils.

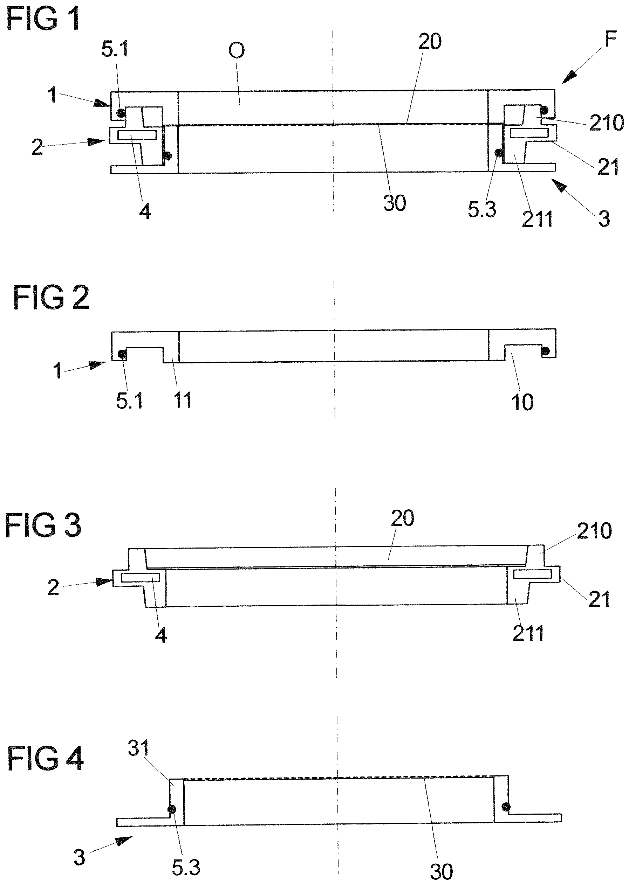

In der Fig. 1 ist eine Ausführungsform einer erfindungsgemäßen zusammengebauten Filtereinheit F in Schnittansicht dargestellt. Die Filtereinheit F weist ein Modulgehäuse auf, das aus einer Gehäusebaugruppe mit einem Deckelteil 1 und einem Unterteil 3 gebildet wird. Innerhalb der Gehäusebaugruppe 1, 3 ist ein Filtereinsatz 2 mit einem Partikelsammelfilter 20 aufgenommen.

Die Filtereinheit F weist eine durchgehende Öffnung O auf, über die Luft durch die Filtereinheit F und den darin angeordneten Partikelsammelfilter (nachfolgend kurz Filter) 20 strömen kann. An dem Filter 20, der hier kreisscheibenförmig und damit als Filterscheibe ausgebildet ist, werden in der Luft enthaltene Partikel zurückgehalten. Durch Wiegung des Filters 20 (mit oder ohne Filtereinsatz 2) vor und nach einem Durchströmen der Filtereinheit F für eine vorgegebene Messdauer (Bestaubung) wird die Masse der gesammelten Partikel bestimmt, um hier die PM₁₀ und/oder PM_{2.5} Massenkonzentration in der Luft aus der Umgebung zu bestimmen. Dabei stehen die Bezeichnungen "PM₁₀" und "PM_{2.5}" für Partikel, deren aerodynamischer Durchmesser weniger als 10 µm bzw. weniger als 2,5 µm beträgt.

Die Filtereinheit F verwirklicht die in den beigefügten Ansprüchen enthaltenen Merkmale.

So weist beispielsweise der Filtereinsatz 2 ein Trägerbauteil in Form eines Tragrings 21 auf, an dem der Filter 20 gehalten ist und an oder in dem ein elektronischer Schaltkreis mit einem RFID-Chip 4 und einem Datenspeicher angeordnet, beispielsweise in das Material des Tragrings 21 eingebettet oder an diesem aufgeklebt ist. Der Tragring 21, über den hier das Deckelteil 1 und das Unterteil 3 miteinander verbunden sind, weist an seiner dem Deckelteil 1 zugewandten Oberseite einen ersten vorzugsweise umlaufenden und kreisringförmigen Kraftschlussbereich 210 und an seiner dem Unterteil 3 zugewandten Unterseite einen zweiten vorzugsweise ebenfalls umlaufenden und kreisringförmigen Kraftschlussbereich 211 auf. Der Durchmesser des zweiten Kraftschlussbereichs 211 ist dabei kleiner als der Durchmesser des ersten Kraftschlussbereichs 210, so dass an der Oberseite des Tragrings 21 ein schmaler Auflagerand von dem ersten Kraftschlussbereich 210 umrandet ist, auf dem der Filter 20 aufliegen kann.

Im Querschnitt sind beide Kraftschlussbereiche 210, 211 ferner konisch ausgeführt, um ein Einstecken des jeweiligen Kraftschlussbereiches 210, 211 in eine zugeordnete umlaufende Nut 10 des Deckelteils 1 bzw. ein Aufstecken an einen hülsenartig vorspringenden Auflageabschnitt 31 des Unterteils 3 zu erleichtern.

Über diese beiden im Querschnitt konischen Kraftschlussbereiche 210, 211, die jeweils von einer durch den Filter 20 aufgespannten Filterebene im Wesentlichen senkrecht hervorstehen, ist der Filtereinsatz 2 an beiden Gehäuseteilen 1 und 3 befestigt, so dass bei einem Trennen der beiden Gehäuseteile 1 und 3 voneinander der Filtereinsatz 2 mit dem Filter 20 weiterhin an einem der Gehäuseteile 1 oder 3 gehalten ist. Beispielsweise verbleibt der Filtereinsatz 2 aufgrund des Kraftschlusses zwischen zweitem Kraftschlussbereich 211 und der äußeren Mantelfläche des Auflageabschnitts 31 mit dem Filter 20 an dem Unterteil 3, wenn das Deckelteil 1 abgehoben wird. Analog kann über den Eingriff des ersten Kraftschlussbereichs 210 in die umlaufende Nut 10 des Deckelteils 1 und die kraftschlüssige Verbindung zwischen einer Seitenwand der Nut 10 und dem Kraftschlussbereich 210 der Filtereinsatz 2 an dem Deckelteil 1 verbleiben, wenn das Unterteil 3 entfernt werden soll.

Das Unterteil 3 ist hier als Stützsiebträger ausgebildet, indem hieran ein vorzugsweise metallisches Stützsieb 30 angeordnet und festgelegt ist, das in zusammengebautem Zustand der Filtereinheit F den Filter 20 abstützt, um eine Verformung des beladenen Filters 20 zu verhindern. Das Stützsieb 30 unterstützt somit den Filter 20, so dass der Filter 20 bei der Bestaubung dem entstehenden Staudruck standhält, ohne sich zu verformen. Hierbei liegt das Stützsieb 30 auf einem ringförmigen Auflageabschnitt des Unterteils bzw. Stützsiebträgers 3 auf, über den das Stützsieb 30 gegen die Unterseite des Filters 20 gedrückt wird, wenn die beiden Gehäuseteile 1 und 3 und der Filtereinsatz 2 miteinander verbunden werden.

Über den ringförmig an der Oberseite des Tragrings 21 vorstehenden Kraftschlussbereich 210 wird zum einen eine umlaufende seitliche Berandung und Abstützung des in den Filtereinsatz 2 eingesetzten Filters 20 erreicht. Durch die im Querschnitt konische Ausbildung des Kraftschlussbereiches 210 bildet dieser des Weiteren an seiner Innenseite eine trichterförmige Verjüngung mit schräg verlaufender Seitenfläche auf, durch die der Filter 20 beim losen Einlegen in das Trägerbauteil 21 automatisch zentriert wird.

Das Deckelteil 1 weist einen eine Seitenwand der Nut 10 bildenden, radial innen liegenden Kontaktabschnitt 11 auf, der hülsenartig in Richtung des Unterteils 3 vorsteht, wenn das Modulgehäuse bestimmungsgemäß zusammengesetzt ist. Zwischen diesem Kontaktabschnitt 11 und dem in Richtung des Filters 20 und des Deckelteils 1 vorstehenden, hier ebenfalls hülsenartigen Auflageabschnitt 31 des Unterteils bzw. Stützsiebträgers 3 werden der Filter 20 und das Stützsieb 30 an ihrem jeweiligen Rand gegeneinander gedrückt und eingespannt, wenn die Filtereinheit F bestimmungsgemäß zusammengebaut ist. Randabschnitte des Filters 20 und des Stützsiebs 30 werden somit zwischen den einander zugewandten Stirnseiten der jeweils hülsenartigen und mit annähernd gleichem Durchmesser ausgebildeten Kontakt- und Auflageabschnitte 11 und 31 eingeklemmt, um insbesondere den nur lose an den Tragring 21 eingelegten Filter 20 innerhalb des Modulgehäuses zu fixieren. Hierdurch wird der Filter 20 erst bei bestimmungsgemäßer Verbindung der beiden Gehäuseteile 1 und 3 miteinander an dem Filtereinsatz 2 und innerhalb der durch die beiden Gehäuseteile 1, 3 definierten Gehäusebaugruppe 1, 3 fixiert.

Der bestimmungsgemäße Zusammenbau der mehrteiligen (hier dreiteiligen) Filtereinheit F ist damit vorliegend besonders einfach. Zunächst wird ein Filter 20 in die schalenartige Aussparung des Tragrings 21 eingelegt. Anschließend wird der Filtereinsatz 2 mit seinem Tragring 21 und dem in der schalenartigen Aussparung des Tragrings 21 eingelegten und hierdurch an dem Tragring 21 gehaltenen Filter 20 an eines des Gehäuseteile 1 oder 3 gesteckt. Danach kann das Gehäuseteil mit dem daran bereits festgelegten Filtereinsatz 2 über den zugehörigen, gegenüberliegenden Kraftschlussbereich 211 oder 210 des Filtereinsatz 2 an das andere Gehäuseteil 3 bzw. 1 gesteckt werden. Weitere Befestigungsmittel sind nicht nötig.

Um ein Ansaugen von Fremdluft abseits der zentral entlang einer Symmetrielinie durch die Filtereinheit F gehenden, hier kreiszylindrischen Öffnung O zu vermeiden, sind Dichtungen 5.1 und 5.3 zwischen dem Filtereinsatz 2 und dem Deckelteil 1 sowie zwischen dem Filtereinsatz 2 und dem Unterteil 3 vorgesehen. Diese Dichtungen werden vorliegend durch Dichtungsringe 5.1 und 5.3 gebildet, die jeweils an dem dem jeweiligen Gehäuseteil 1 oder 3 zugeordneten Kraftschlussbereich 210 oder 211 anliegen, wenn die Filtereinheit F bestimmungsgemäß zusammengebaut ist. Der eine Dichtungsring 5.1 liegt dabei im zusammengebauten Zustand des Modulgehäuses an einer Außenseite des ersten, oberen Kraftschlussbereichs 210 des Filtereinsatzes 2 und an einer Innenseite eines Abschnitts des Oberteils 1 an, die die andere, radial weiter außen liegende Seitenwand der Nut 10 bildet. Der andere Dichtungsring 5.2 wiederum liegt an einer Innenseite des zweiten, unteren Kontaktabschnitts 211 des Filtereinsatzes 2 und der äußeren Mantelfläche des Kontaktabschnitts 31 des Unterteils 3 an.

Durch den dargestellten Aufbau kann die Filtereinheit F werkzeuglos montiert und demontiert werden, da die einzelnen Komponenten ineinander steckbar ausgebildet sind. Der Filtereinsatz 2 ermöglicht hierbei über seine an sich gegenüberliegenden Seiten ausgebildeten Kraftschlussbereiche 210, 211 ein Aufstecken des Deckelteils 1 ebenso wie ein Einstecken des Unterteils 3. Der bei der Entnahme des Filtereinsatzes 2 lose an dem Tragring 21 vorliegende und damit einfach handhabbare Filter 20 ist dabei im zusammengebauten Zustand der Filtereinheit F innerhalb deren Modulgehäuse durch die gegeneinander gedrückten Abschnitte 11 und 31 der Gehäuseteile 1 und 3 fixiert, die dann zwischen sich einen Rand des Filters 20 einklemmen.

Eine Filtereinheit F gemäß den Figuren 1 bis 4 verwirklicht hier insbesondere die nachfolgend genannten Merkmale und Vorteile:
1. Zum Zwecke der automatischen Handhabung kann das während der Besammlung erforderliche Stützsieb 30 nach unten entnommen werden. Dazu kann der scheibenförmige Filter 20 im Tragring 21 verbleiben. Der Filter 20 muss nicht berührt werden.
2. Der Tragring 21 enthält den RFID-Chip 4, mit dem der Filter 20 eindeutig elektronisch identifizierbar ist, indem hierüber berührungslos eine Kennung ausgelesen werden kann.
3. Der Tragring 21 hat an seiner Unterseite einen Kraftschlussbereich 211 mit einer im Querschnitt konischen Form, durch die der Tragring 21 und damit der Filtereinsatz 2 zuverlässig von einer Robotik aufgenommen werden kann. Der Kraftschlussbereich 211 (wie auch der Kraftschlussbereich 210) definiert somit einen Griffabschnitt an dem Filtereinsatz 2, über den ein Kraftangriff besonders einfach möglich ist, um den Filtereinsatz 2 mit dem Filter 20 von dem Deckelteil 1 (dem Unterteil 3) zu trennen, an dem der Filtereinsatz 2 nach dem Entfernen des Unterteils 3 (des Deckelteils 1) gehalten ist, und/oder um den Filtereinsatz 2 mit dem Filter 20 zu transportieren.
4. Der Tragring 21 weist an seiner Oberseite einen Kraftschlussbereich 210 mit einer im Querschnitt konischen Form auf, durch den der Filter 20 beim Einlegen in den Tragring 21 sicher zentriert wird.
5. Das ringförmige Deckelteil 1 enthält die Dichtung 5.1, so dass das Ansaugen von Fremdluft von der Seite vermieden wird.
6. Das ringförmige Unterteil bzw. der ringförmige Stützsiebträger 3 enthält ebenfalls eine Dichtung 5.2, so dass auch hierdurch das Ansaugen von Fremdluft von der Seite vermieden wird.
7. Der RFID-Chip 4 kann zusätzlich zur Speicherung von Prozessdaten, insbesondere von Prozessdaten aus der Bestaubung genutzt werden.
8. Die Bestimmungen geltender Normen werden weiterhin erfüllt.

### Bezugszeichenliste

- 1: Deckelteil
- 10: Nut (Aussparung)
- 11: Kontaktabschnitt
- 2: Filtereinsatz
- 20: Filter
- 21: Tragring (Trägerbauteil)
- 210, 211: Kraftschlussbereich
- 3: Stützsiebträger (Unterteil)
- 30: Stützsieb
- 31: Auflageabschnitt
- 4: RFID-Chip
- 5.1, 5.3: Dichtungsring
- F: Filtereinheit
- O: Öffnung

## Patentansprüche

1. Filtereinheit mit einem flächigen Partikelsammelfilter zur Bestimmung von Massenkonzentrationen in der Luft oder zur Emissionsmessungen an in einer Abgasleitung geführten Luft, wobei die Filtereinheit von Luft durchströmbar ist, um in der Luft enthaltene Partikel an dem Partikelsammelfilter zu sammeln, wobei die Filtereinheit (F) wenigstens das Folgende umfasst:
- ein Modulgehäuse für den Partikelsammelfilter (20), das aus einer mehrteiligen Gehäusebaugruppe (1, 3) mit einem ersten Gehäuseteil (1) und einem zweiten Gehäuseteil (3) gebildet ist, wobei die zwei Gehäuseteile (1, 3) miteinander verbunden sind, und
- ein Stützsieb (30) zur Abstützung des Partikelsammelfilters (20) innerhalb der Gehäusebaugruppe (1, 3), das an dem zweiten Gehäuseteil (3) angeordnet ist,
**dadurch gekennzeichnet, dass**
die Filtereinheit (F) weiterhin einen Filtereinsatz (2) umfasst, der in der Gehäusebaugruppe (1, 2) aufgenommen ist und der ein Trägerbauteil (21) aufweist, an dem der Partikelsammelfilter (20) gehalten ist,
wobei das Trägerbauteil (21) einen ersten Kraftschlussbereich (210) und einen zweiten Kraftschlussbereich (211) aufweist, wobei die zwei Kraftschlussbereiche (210, 211) unterschiedlich sind und jeweils im Wesentlichen senkrecht von einer durch den flächigen Partikelsammelfilter (20) aufgespannten Filterebene vorstehen,
wobei der Filtereinsatz (2) über dem ersten Kraftschlussbereich (210) an dem ersten Gehäuseteil (1) und über den zweiten Kraftschlussbereich (211) an dem zweiten Gehäuseteil (3) so kraftschlüssig befestigt ist, dass bei einem Trennen der beiden Gehäuseteile (1, 3) voneinander der Filtereinsatz (2) mit dem Partikelsammelfilter (20) weiterhin an einem der Gehäuseteile (1, 3) gehalten ist,
wobei das Stützsieb (30) gegen die Unterseite des Partikelsammelfilters (20) gedrückt wird, wenn die zwei Gehäuseteile (1, 3) und der Filtereinsatz (2) miteinander verbunden werden, und
wobei der Partikelsammelfilter (20) lose in eine Aussparung des Trägerbauteils (21) eingelegt ist und die Filtereinheit derart ausgebildet ist, dass der Partikelsammelfilter (20) erst bei bestimmungsgemäßer Verbindung der beiden Gehäuseteile (1, 3) miteinander an dem Filtereinsatz (2) und innerhalb der durch die zwei Gehäuseteile (1, 3) definierten Gehäusebaugruppe (1, 3) fixiert wird.

2. Filtereinheit nach Anspruch 1, **dadurch gekennzeichnet, dass** der Filtereinsatz (2) an den beiden Kraftschlussbereichen (210, 211) über eine Steckverbindung an den jeweiligen Gehäuseteilen (1, 3) befestigt ist.

3. Filtereinheit nach Anspruch 1 oder 2, **dadurch gekennzeichnet, dass** das Stützsieb (30) so an dem zweiten Gehäuseteil (3) angeordnet ist, das das Stützsieb (30) an den ersten Gehäuseteil (3) verbleibt, wenn die beiden Gehäuseteile (1, 3) wieder voneinander getrennt werden.

4. Filtereinheit nach einem der vorhergehenden Ansprüche, **dadurch gekennzeichnet, dass** die beiden Kraftschlussbereiche (210, 211) im Querschnitt konisch ausgebildet sind und/oder der erste Kraftschlussbereich (210) eine in der Filterebene liegende seitliche Abstützung für den Partikelsammelfilter (30) bereitstellt.

5. Filtereinheit nach Anspruch 4, **dadurch gekennzeichnet, dass** der im Querschnitt konisch ausgebildete erste Kraftschlussbereich (210) eine schräg verlaufende Seitenfläche aufweist, durch die der Partikelsammelfilter (20) bei seiner Anordnung an dem Trägerbauteil (21) zentriert wird.

6. Filtereinheit nach einem der vorhergehenden Ansprüche, **dadurch gekennzeichnet, dass** jeder Kraftschlussbereich (210, 211) einen Griffabschnitt definiert, über den ein Kraftangriff möglich ist, um den Filtereinsatz (2) mit dem Partikelsammelfilter (20) von dem Gehäuseteil (1, 3) zu trennen, an dem der Filtereinsatz (2) nach dem Trennen der beiden Gehäuseteile (1, 3) voneinander gehalten ist und/oder um den Filtereinsatz (2) zu transportieren.

7. Filtereinheit nach einem der vorhergehenden Ansprüche, **dadurch gekennzeichnet, dass** die zwei Kraftschlussbereiche (210, 211) jeweils kreisringförmig ausgebildet sind und ein Durchmesser des zweiten Kraftschlussbereichs (211) kleiner ist als ein Durchmesser des ersten Kraftschlussbereichs (210).

8. Filtereinheit nach einem der vorhergehenden Ansprüche, **dadurch gekennzeichnet, dass** die Filtereinheit (F) mit der Gehäusebaugruppe (1, 3) und dem darin aufgenommenen Filtereinsatz (2) ein vormontierbares Modul zum Einsetzen in eine Filtervorrichtung bildet.

9. Filtereinheit nach einem der vorhergehenden Ansprüche, **dadurch gekennzeichnet, dass** der Filtereinsatz (2) einen elektronischen Schaltkreis (4) aufweist, der dazu ausgebildet und vorgesehen ist, hierüber eine elektronisch auslesbare Kennung des Filtereinsatz (2) bereitzustellen und/oder hierüber elektronisch auslesbare Daten bereitzustellen, die während eines Gebrauchs der Filtereinheit (F) erzeugt wurden.

## Claims

1. A filter unit with a flat particle collecting filter for determining mass concentrations in the air or for emission measurements on air carried in an exhaust gas line, wherein the filter unit can be traversed by air in order to collect the particles contained in the air on the particle collecting filter, the filter unit (F) comprising at least:
- a module housing for the particle collecting filter (20), which is formed from a multipart housing assembly (1, 3) with a first housing part (1) and a second housing part (3), wherein the two housing parts (1, 3) are connected to each other, and
- a support sieve (30) for supporting the particle collecting filter (20) within the housing assembly (1, 3), which is arranged on the second housing part (3),
**characterized in that**
the filter unit (F) furthermore comprises a filter insert (2) which is accommodated in the housing assembly (1, 2) and which includes a carrier component (21) on which the particle collecting filter (20) is held,
wherein the carrier component (21) includes a first frictional locking area (210) and a second frictional locking area (211), wherein the two frictional locking areas (210, 211) are different and each protrude substantially perpendicularly from a filter plane defined by the flat particle collecting filter (20),
wherein the filter insert (2) is frictional attached to the first housing part (1) via the first frictional locking area (210) and to the second housing part (3) via the second frictional locking area (211) so that when the two housing parts (1, 3) are separated from each other, the filter insert (2) with the particle collecting filter (20) still is held on one of the housing parts (1, 3),
wherein the support sieve (30) is pressed against the underside of the particle collecting filter (20) when the two housing parts (1, 3) and the filter insert (2) are connected to each other, and
wherein the particle collecting filter (20) is loosely inserted into a cutout of the carrier component (21) and the filter unit is configured in such a way that the particle collecting filter (20) is fixed on the filter insert (2) and within the housing assembly (1, 3) defined by the two housing parts (1, 3) only when the two housing parts (1, 3) are connected to each other as intended.

2. The filter unit according to claim 1, **characterized in that** the filter insert (2) on the two frictional locking areas (210, 211) is attached to the respective housing parts (1, 3) via a plug connection.

3. The filter unit according to claim 1 or 2, **characterized in that** the support sieve (30) is arranged on the second housing part (3) in such a way that the support sieve (30) remains on the first housing part (3) when the two housing parts (1, 3) are again separated from each other.

4. The filter unit according to any of the preceding claims, **characterized in that** the two frictional locking areas (210, 211) are formed conical in cross-section and/or the first frictional locking area (210) provides a lateral support for the particle collecting filter (30) lying in the filter plane.

5. The filter unit according to claim 4, **characterized in that** the first frictional locking area (210) formed conical in cross-section includes an inclined side surface by which the particle collecting filter (20) is centered when it is arranged on the carrier component (21).

6. The filter unit according to any of the preceding claims, **characterized in that** each frictional locking area (210, 211) defines a handle portion via which a force application is possible in order to separate the filter insert (2) with the particle collecting filter (20) from the housing part (1, 3) on which the filter insert (2) is held after the two housing parts (1, 3) are separated from each other and/or to transport the filter insert (2).

7. The filter unit according to any of the preceding claims, **characterized in that** the two frictional locking areas (210, 211) each are circular-ring-shaped, and a diameter of the second frictional locking area (211) is smaller than a diameter of the first frictional locking area (210).

8. The filter unit according to any of the preceding claims, **characterized in that** the filter unit (F) with the housing assembly (1, 3) and the filter insert (2) accommodated therein forms a pre-mountable module for insertion into a filter device.

9. The filter unit according to any of the preceding claims, **characterized in that** the filter insert (2) includes an electronic circuit (4) which is configured and intended to thereby provide an electronically readable identifier of the filter insert (2) and/or to thereby provide electronically readable data which were generated during use of the filter unit (F).

## Revendications

1. Unité de filtrage avec un filtre plat collecteur de particules pour déterminer des concentrations massiques dans l'air ou pour des mesures d'émission sur l'air guidé dans une ligne de gaz d'échappement, dans laquelle l'air peut s'écouler à travers l'unité de filtrage afin de collecter des particules contenues dans l'air au niveau du filtre collecteur de particules, l'unité de filtrage (F) comprenant au moins :
- un boîtier de module pour le filtre collecteur de particules (20), qui est formé d'un ensemble de boîtier à plusieurs parties (1, 3) avec une première partie de boîtier (1) et une deuxième partie de boîtier (3), les deux parties de boîtier (1, 3) étant reliées l'une à l'autre, et
- un tamis de support (30) pour supporter le filtre collecteur de particules (20) à l'intérieur de l'ensemble de boîtier (1, 3), qui est agencé sur la deuxième partie de boîtier (3),
**caractérisée en ce que**
l'unité de filtrage (F) comprend en outre un insert de filtre (2) qui est logé dans l'ensemble de boîtier (1, 2) et qui présente un composant porteur (21) sur lequel le filtre collecteur de particules (20) est maintenu,
dans laquelle le composant porteur (21) présente une première région de liaison par frottement (210) et une deuxième région de liaison par frottement (211), les deux régions de liaison par frottement (210, 211) étant différentes et chacune faisant saillie sensiblement perpendiculairement à partir d'un plan de filtre défini par le filtre plat collecteur de particules (20),
dans laquelle l'insert de filtre (2) est fixé par friction à la première partie de boîtier (1) par l'intermédiaire de la première région de liaison par frottement (210) et à la deuxième partie de boîtier (3) par l'intermédiaire de la deuxième région de liaison par frottement (211) de telle sorte que, lorsque les deux parties de boîtier (1, 3) sont séparées l'une de l'autre, l'insert de filtre (2) avec le filtre collecteur de particules (20) continue à être maintenue sur l'une des parties de boîtier (1, 3),
dans laquelle le tamis de support (30) est pressé contre la face inférieure du filtre collecteur de particules (20) lorsque les deux parties de boîtier (1, 3) et l'insert de filtre (2) sont reliées l'une à l'autre, et
dans laquelle le filtre collecteur de particules (20) est inséré de manière lâche dans un évidement du composant porteur (21) et l'unité de filtrage est conçue de telle sorte que le filtre collecteur de particules (20) est fixé sur l'insert de filtre (2) et à l'intérieur de l'ensemble de boîtier (1, 3) défini par les deux parties de boîtier (1, 3) uniquement lorsque les deux parties de boîtier (1, 3) sont correctement reliées l'une à l'autre.

2. Unité de filtrage selon la revendication 1, **caractérisée en ce que** l'insert de filtre (2) est fixé aux parties de boîtier respectives (1, 3) au niveau des deux régions de liaison par frottement (210, 211) par une connexion enfichable.

3. Unité de filtrage selon la revendication 1 ou 2, **caractérisée en ce que** le tamis de support (30) est agencé sur la deuxième partie de boîtier (3) de telle sorte que le tamis de support (30) reste sur la première partie de boîtier (3) lorsque les deux parties de boîtier (1, 3) sont à nouveau séparées l'une de l'autre.

4. Unité de filtrage selon l'une quelconque des revendications précédentes, **caractérisée en ce que** les deux régions de liaison par frottement (210, 211) sont de forme conique en section transversale et/ou la première région de liaison par frottement (210) constitue un support latéral, situé dans le plan du filtre, pour le filtre collecteur de particules (30).

5. Unité de filtrage selon la revendication 4, **caractérisée en ce que** la première région de liaison par frottement (210), qui est de forme conique en section transversale, présente une surface latérale inclinée, au moyen de laquelle le filtre collecteur de particules (20) est centré lorsqu'il est agencé sur le composant porteur (21).

6. Unité de filtrage selon l'une quelconque des revendications précédentes, **caractérisée en ce que** chaque région de liaison par frottement (210, 211) définit une partie poignée par laquelle une application de force est possible pour séparer l'insert de filtre (2) avec le filtre collecteur de particules (20) de la partie de boîtier (1, 3) sur laquelle l'insert de filtre (2) est maintenu après que les deux parties de boîtier (1, 3) ont été séparées l'une de l'autre et/ou pour transporter l'insert de filtre (2).

7. Unité de filtrage selon l'une quelconque des revendications précédentes, **caractérisée en ce que** les deux régions de liaison par frottement (210, 211) sont chacune annulaire et un diamètre de la deuxième région de liaison par frottement (211) est inférieur à un diamètre de la première région de liaison par frottement (210).

8. Unité de filtrage selon l'une quelconque des revendications précédentes, **caractérisée en ce que** l'unité de filtrage (F) avec l'ensemble de boîtier (1, 3) et l'insert de filtre (2) logée dans celui-ci forme un module préassemblable destiné à être inséré dans un dispositif de filtrage.

9. Unité de filtrage selon l'une quelconque des revendications précédentes, **caractérisée en ce que** l'insert de filtre (2) comprend un circuit électronique (4) adapté et prévu pour fournir de cette manière un identifiant lisible électroniquement de l'insert de filtre (2) et/ou pour fournir de cette manière des données lisibles électroniquement, qui ont été générées pendant une utilisation de l'unité de filtre (F).
